# EUROPÄISCHE PATENTSCHRIFT

(11) **EP 1 522 604 B1**
(45) Veröffentlichungstag und Bekanntmachung des Hinweises auf die Patenterteilung: **14.02.2007**
(21) Anmeldenummer: 03022540.3
(22) Anmeldetag: 02.10.2003
(51) Int. Cl.: C23C 4/02, C23C 4/18

(54) **Schichtsystem und Verfahren zur Herstellung eines Schichtsystems**
Layer system and process for its production
Système de couches et procédé pour sa fabrication

(43) Veröffentlichungstag der Anmeldung: 13.04.2005
(73) Patentinhaber: SIEMENS AKTIENGESELLSCHAFT, 80333 München (DE)
(72) Erfinder: Bostanjoglo, Georg, Dr., 12161 Berlin (DE); Cox, Nigel-Philip, 10119 Berlin (DE); Wilkenhöner, Rolf, Dr., 10589 Berlin (DE)

(56) Entgegenhaltungen:
- EP-A- 0 713 957
- EP-A- 1 275 748
- EP-A- 1 422 054
- EP-A- 1 491 658
- DE-A- 3 038 416
- DE-A- 10 057 187
- US-A- 5 869 798
- PEDRAZA A J ET AL: "ENHANCED METAL-CERAMIC ADHESION BY SEQUENTIAL SPUTTER DEPOSITION AND PULSED LASER MELTING OF COPPER FILMS ON SAPPHIRE SUBSTRATES" JOURNAL OF MATERIALS SCIENCE, CHAPMAN AND HALL LTD. LONDON, GB, Bd. 24, Nr. 1, 1989, Seiten 115-123, XP000030605 ISSN: 0022-2461

## Beschreibung

Die Erfindung betrifft ein Schichtsystem gemäß dem Oberbegriff des Anspruchs 1 und Verfahren zur Herstellung eines Schichtsystems gemäß dem Oberbegriff der Ansprüche 11 und 12.

Bauteile für hohe Temperaturen werden heutzutage in der Regel mit Schutzschichten versehen.
Dies können metallische Korrosionsschutzschichten (MCrAlX-Schichten) oder keramische Wärmedämmschichten sowie Schichtsysteme mit metallischen Korrosionsschutzschichten und keramischen Wärmedämmschichten sein.
Als Beschichtungsverfahren für diese Beschichtungen benutzt man Plasma-gestützte Pulverspritzverfahren aufgrund ihrer vergleichsweise hohen Wirtschaftlichkeit.
Die Anbindung solcher Schichten an das Substrat erfolgt durch mechanische Verklammerung und anschließende Diffusionswärmebehandlung. Gelegentlich kann es in hochbelasteten Bereichen oder an ungünstigen, d.h. besonders an mechanisch hoch belasteten Stellen des Bauteils zu einer Ablösung der Schicht im Betrieb kommen. Das Abplatzen der Schicht während des Betriebs führt zur Schädigung des Grundwerkstoffs, so dass die Bauteillebensdauer wesentlich verringert ist.

Die EP 1 275 748 A2 offenbart ein Schichtsystem, bei dem Verankerungsmittel auf einem Substrat vorhanden sind, die sich durch mehrere Schichten erstrecken. Eine äußere keramische Schicht ist nicht vorhanden.

Die DE 30 38 416 A1 offenbart ein Schichtsystem, bei dem Verankerungsmittel Teil des Substrats sind und wobei alle Verankerungsmittel einen Teil der äußeren Oberfläche darstellen. Ebenso ist ein Teil der Zwischenschicht an der Oberfläche vorhanden.

Es ist daher Aufgabe der Erfindung ein Schichtsystem und Verfahren zur Herstellung eines Schichtsystems aufzuzeigen, das eine bessere Anbindung von einer Schutzschicht an ein Substrat und/oder von Schichten untereinander aufweist.

Die Aufgabe wird gelöst durch ein Schichtsystem gemäß des Anspruchs 1 bzw. durch Verfahren zur Herstellung eines Schichtsystems gemäß der Ansprüche 11 und 12.

Das erfindungsgemäße Schichtsystem weist gesondert erzeugte Verankerungsmittel auf, die eine sehr starke Anbindung an das Substrat oder an eine unter ihr auf dem Substrat angeordnete Schicht aufweisen und auf andere Art und Weise als die Schicht an das Substrat oder die andere Schicht angebunden sind.
Die Verankerungsmittel erstrecken sich nur innerhalb der Zwischenschicht. Ebenso entspricht das Material der Verankerungsmittel dem Material der Schicht. Eine äußere keramische Schicht ist vorhanden und ist zumindest über einem Verankerungsmittel der Zwischenschicht angeordnet.

Die im Vergleich zur vorhandenen Schichtbindung (z.B. Verklammerung durch Oberflächenrauhigkeit) stärkere Anbindung der Verankerungsmittel erfolgt beispielsweise durch eine schmelzmetallurgische Bindung, die in einem separaten Prozess erzeugt wird. Somit kann weiterhin das kostengünstige und wirtschaftliche Plasmaspritzverfahren verwendet werden, um die Schicht aufzubringen.

In den Unteransprüchen sind weitere vorteilhafte Maßnahmen aufgelistet.
Die in den Unteransprüchen aufgelisteten Maßnahmen können in vorteilhafter Weise miteinander kombiniert werden.

Es zeigen
- Figur 1: ein Schichtsystem nach dem Stand der Technik,
- Figur 2: Teil eines erfindungsgemäß ausgebildeten Schichtsystems,
- Figur 3: eine perspektivische Draufsicht auf ein erfindungsgemäß ausgestaltetes Schichtsystem,
- Figur 4: Verfahrensschritte eines erfindungsgemäßen Verfahrens,
- Figur 5: Verfahrensschritte eines anderen erfindungsgemäßen Verfahrens,
- Figur 6, 7: erfindungsgemäß ausgebildete Schichtsysteme,
- Figur 8: eine Gasturbine und
- Figur 9: eine Brennkammer.

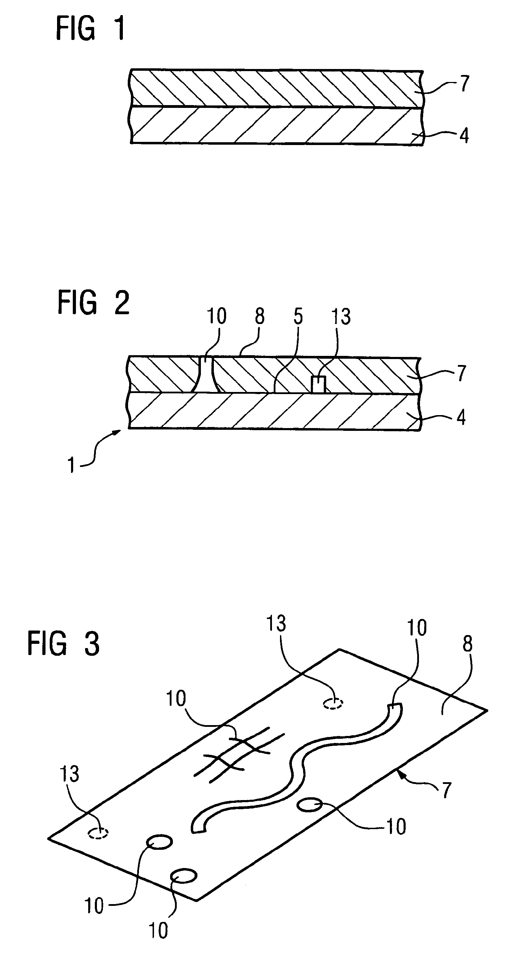

Figur 1 zeigt ein Schichtsystem nach dem Stand der Technik. Das Schichtsystem weist ein Substrat 4 auf.
Das Substrat 4 kann metallisch oder keramisch sein und ist im Falle von Gasturbinenbauteilen insbesondere aus einer eisen-, nickel- oder kobaltbasierten Superlegierung hergestellt.

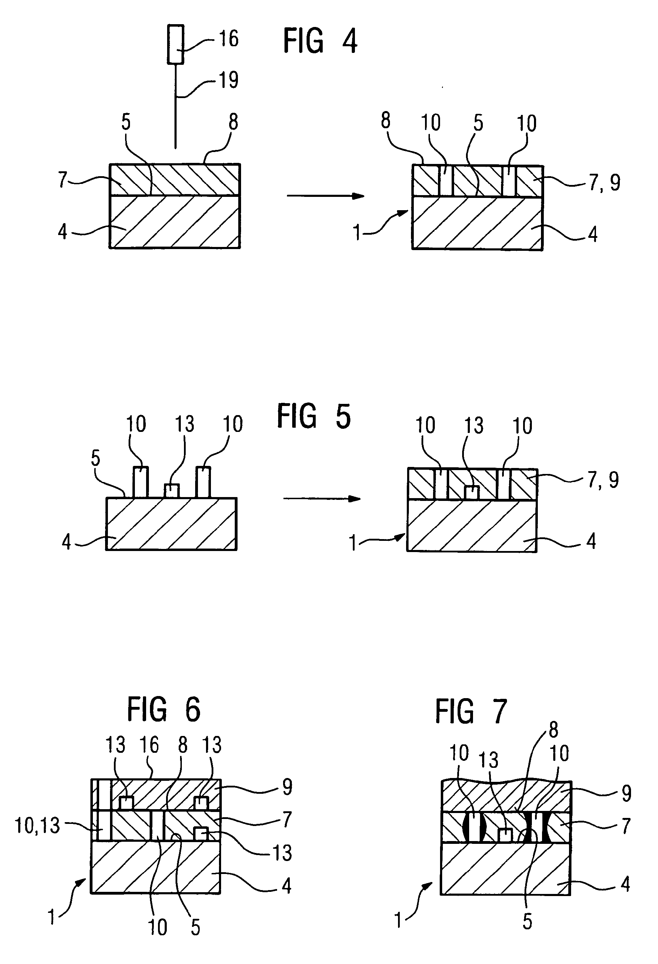

Auf dem Substrat 4 sind eine Schicht 7, 9 (in Fig. 6, 7 zwei Schichten) vorhanden. Dies ist eine metallische Schicht 7 und eine keramische Schicht 9.

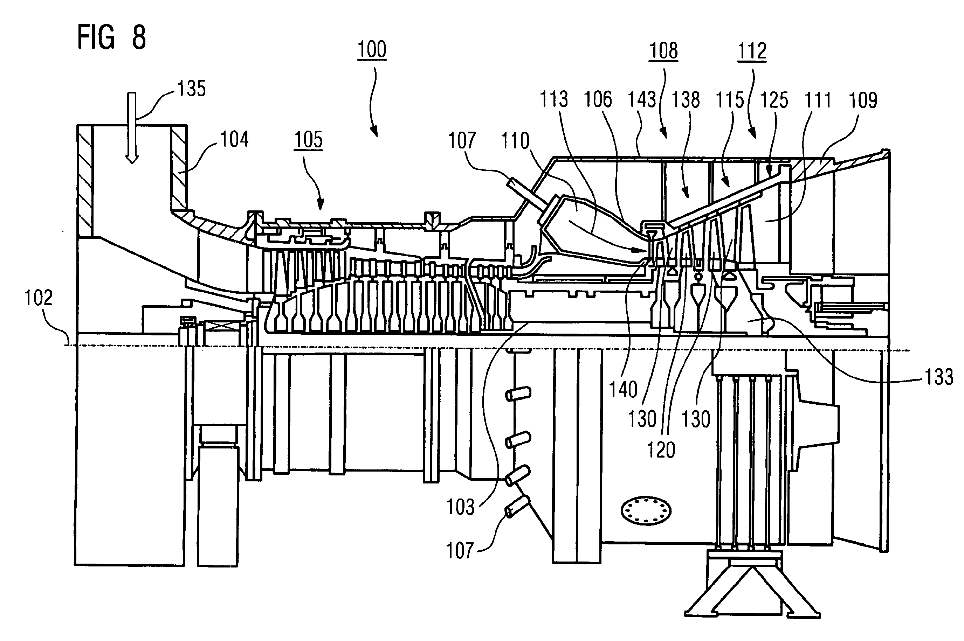

Für Turbinenschaufeln 120, 130 (Fig. 8) wird beispielsweise auf das Substrat 4 eine metallische Korrosionsschutzschicht 7 (Fig. 6, 7, 8) des Typs MCrAlX aufgebracht, worauf dann zusätzlich noch eine äußere, beispielsweise eine keramische Wärmedämmschicht 9 (Fig. 6, 7) aufgebracht wird.

Die Anbindung der Zwischenschicht 7 auf dem Substrat 4 bzw. der Schichten 7, 9 untereinander erfolgt nach dem bisherigen Stand der Technik allein durch mechanische Verklammerung (Oberflächenrauhigkeit) an die zugrunde Oberfläche und anschließende Diffusionswärmebehandlung.

Figur 2 zeigt ausgehend von Figur 1 eine Zwischenschicht 7 eines erfindungsgemäßen Schichtsystems 1 (Fig. 6, 7).
Auf der Oberfläche 5 des Substrats 4 sind Verankerungsmittel 10, 13 vorhanden. Die Verankerungsmittel 10, 13 weisen eine Art der Anbindung an die Oberfläche 5 auf, die eine erhöhte Anbindungskraft (genauer: Kraft/pro Kontaktfläche) an die Oberfläche 5 gegenüber der Art der Anbindung der Zwischenschicht 7 an die Oberfläche 5 ergibt.

Die Verankerungsmittel 10, 13 werden beispielsweise durch einen geeignet geführten Laserschweißprozess schmelzmetallurgisch an das Substrat 4 angebunden.
Ebenso ist es vorstellbar, dass die Schicht 7 an bestimmten Stellen durch Lasercladding (Laserpulverbeschichten) aufgebracht wird und so Verankerungsmittel 10, 13 bilden. Die Verankerungsmittel 10, 13 können auch angegossen werden oder beim Giessen des Substrats 4 mit hergestellt werden.
Die Verankerungsmittel 10, 13 stellen Haftungsbrücken für die die Verankerungsmittel 10, 13 umgebende Schicht 7, 9 dar.
Die Verankerungsmittel 10 können sich ausgehend von der Oberfläche 5 des Substrats 4 bis zu der äußeren Oberfläche 8 der Zwischenschicht 7 erstrecken oder sie 13 werden durch die Schicht 7 abgedeckt, so dass die Verankerungsmittel 13 sich nicht bis zur Oberfläche 8 der Schicht 7 erstrecken, also innerhalb der Schicht 7, 9 endend angeordnet sind. Dabei erstrecken sie 13 sich bis zumindest zu 10%, 20%, 30%, 40% der Dicke der Schicht 7, 9 in die Schicht 7, 9.

Die Verankerungsmittel 10, 13 sind beispielsweise nur lokal, also örtlich begrenzt (Fig. 3) auf dem Substrat 4 oder der Schicht 7 vorhanden, nämlich dort, wo die mechanische Belastung am größten ist.

Dies ist beispielsweise der Bereich der Anströmkante einer Turbinenschaufel 120, 130. Das restliche Schaufelblatt würde dann keine Verankerungsmittel aufweisen.

Figur 3 zeigt eine Draufsicht auf eine Oberfläche 8 einer Schicht 7.
Gestrichelt angedeutet sind die Verankerungsmittel 13, die sich nicht bis zur Oberfläche 8 der Schicht 7 erstrecken. Die Verankerungsmittel 10, 13 können auf der Oberfläche 5 verschiedene Geometrien wie Kreise, Steppnähte (d.h. sie sind länglich und kreuzen sich), Wellenformen, Parallelbahnen sowie Kombinationen daraus aufweisen.

Figur 6 zeigt ein erfindungsgemäß ausgebildetes Schichtsystem 1.
Das Schichtsystem 1 besteht aus einem Substrat 4 und zwei Schichten 7, 9.
Die Zwischenschicht 7 ist beispielsweise eine metallische MCrAIX-Schicht und die äußere Schicht 9 ist eine keramische Wärmedämmschicht 9 auf der metallischen Zwischenschicht 7.

Verankerungsmittel 10, 13 sind sowohl in der Zwischenschicht 7 als auch in der äußeren Schicht 9 vorhanden.

Ebenso können die Verankerungsmittel nur in der Zwischenschicht 7 vorhanden sein (Fig. 7).

Die Verankerungsmittel 10, 13 in den Schichten 7, 9 können sich ausgehend von der Oberfläche 5, 8 des Substrats 4 bzw. der Zwischenschicht 7 bis zu der äußeren Oberfläche 8, 16 der Schicht 7, 9 erstrecken oder werden durch die Schichten 7, 9 abgedeckt, so dass die Verankerungsmittel 13 sich nicht bis zur Oberfläche 8, 16 der Schichten 7, 9 erstrecken.

Die Verankerungsmittel 10, 13 in der Zwischenschicht 7 verbessern die Anbindung der Zwischenschicht 7 an das Substrat 4.

Die Verankerungsmittel 10, 13 sind insbesondere in thermisch und/oder mechanisch hoch belasteten Bereichen vorhanden.

Das Schichtsystem 1 ist beispielsweise ein Bauteil einer Gas-100 (Fig. 8) (auch Flugzeugturbine) oder Dampfturbine. Thermisch hoch belastete Bauteile der Turbinen weisen ein solches Schichtsystem auf, wie z.B. Turbinenschaufeln 120, 130, Auskleidungen 155 einer Brennkammer 110 sowie weitere Gehäuseteile, die entlang des Strömungsweges eines heißen Dampfes oder Heißgases sich befinden.

Das Schichtsystem 1 kann auf ein neu hergestelltes Bauteil aufgebracht werden sowie auf Bauteile, die nach dem Einsatz wieder aufgearbeitet werden (Refurbishment). Dabei werden die Bauteile zuvor von degradierten Schichten befreit, Risse gegebenenfalls repariert und es erfolgt eine erneute Beschichtung des Substrats 4.

Die Figur 7 zeigt ein weiteres Ausführungsbeispiel eines erfindungsgemäßen Schichtsystems 1.
In diesem Schichtsystem 1 sind die Verankerungsmittel 10, 13 nur in der Zwischenschicht 7 vorhanden. Auf der Zwischenschicht 7 ist die äußere Schicht 9 vorhanden. Eine Kontaktfläche der Verankerungsmittel 10 an der Oberfläche 8 verbessert die Haftung der äußeren Schicht 9 gegenüber einer vergleichbaren Kontaktfläche mit der Zwischenschicht 7. Dies wird beispielsweise dadurch erreich, dass die Kontaktflächen der Verankerungsmittel 10 an der Oberfläche 8 Keimpunkte bilden für ein beispielsweise epitaktisches Aufwachsen einer äußeren Schicht 9 auf der Zwischenschicht 7.
Auch ohne Zwischenschicht 7 (Fig. 4, 5, rechts) wird ein verbessertes Schichtsystem 1 dadurch erreicht, dass die Verankerungsmittel 10, 13 zu einer verbesserten Anbindung der äußeren Schicht 9 an das Substrat 4 führen.

Figur 4 zeigt beispielhaft Verfahrensschritte eines erfindungsgemäßen Verfahrens zur Herstellung eines Schichtsystems 1.
In einem ersten Schritt wird auf das Substrat 4 oder auf eine bereits auf dem Substrat befindliche Schicht in bekannter Art und Weise die zumindest eine Schicht 7, 9 aufgebracht.

Die Schicht 7, 9 wird mit einem Laser 16 oder einer Elektronenstrahlkanone 16 behandelt, die einen entsprechenden Laser- oder Elektronenstrahl 19 aussendet. Durch diese Art der Behandlung wird das Material der Schicht 7, 9 bis zur Oberfläche 5, 8 des Substrats 4 bzw. der Zwischenschicht 7 hin lokal umgewandelt, beispielsweise aufgeschmolzen, so dass sich eine schmelzmetallurgische Anbindung von Material aus der Schicht 7, 9 an das Substrat 4 oder eine bereits darauf aufgebrachte Schicht ergibt. Mit diesem Verfahren werden Verankerungsmittel 10 erzeugt, die sich von der Oberfläche 5, 8 bis hin zur Oberfläche 8, 16 der Schicht 7, 9 erstrecken.

Die Verankerungsmittel 10 sind beispielsweise säulenartig ausgebildet und können auch konkav oder konvex gekrümmt ausgeführt sein (Fig. 7).

Figur 5 zeigt beispielhaft Schritte eines erfindungsgemäßen Verfahrens.
In einem ersten Schritt werden auf das Substrat 4 oder die Schicht 7 zuerst die Verankerungsmittel 10, 13 aufgebracht, also gesondert erzeugt. Dies kann auf verschiedene Art und Weise, wie etwa durch einen geeignet geführten Laserschweißprozess oder Lasercladding erfolgen.
Die Verankerungsmittel 10, 13 weisen eine sehr starke, insbesondere schmelzmetallurgische Anbindung an die Oberfläche 5, 8 des Substrats 4 oder der Zwischenschicht 7 auf.

Die Verankerungsmittel 10, 13 können aber auch bereits bei der Herstellung des Substrats 4 erzeugt worden sein, beispielsweise durch einen Gießprozess.

In einem nachfolgenden Prozess wird die Schicht 7, 9 aufgebracht, wobei die Verankerungsmittel 10, 13 von dem Material der Schicht 7, 9 umschlossen werden und Haftungsbrücken für die Schicht 7, 9 darstellen.

Das Material der Verankerungsmittel 10, 13 ist gleich dem Material der Schicht 7, 9.

Die Figur 8 zeigt eine Gasturbine 100 in einem Längsteilschnitt.
Die Gasturbine 100 weist im Inneren einen um eine Rotationsachse 102 drehgelagerten Rotor 103 auf, der auch als Turbinenläufer bezeichnet wird. Entlang des Rotors 103 folgen aufeinander ein Ansauggehäuse 104, ein Verdichter 105, eine beispielsweise torusartige Brennkammer 110, insbesondere Ringbrennkammer 106, mit mehreren koaxial angeordneten Brennern 107, eine Turbine 108 und das Abgasgehäuse 109. Die Ringbrennkammer 106 kommuniziert mit einem beispielsweise ringförmigen Heißgaskanal 111. Dort bilden beispielsweise vier hintereinandergeschaltete Turbinenstufen 112 die Turbine 108. Jede Turbinenstufe 112 ist aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei am Stator 143 befestigt, wohingegen die Laufschaufeln 120 einer Reihe 125 mittels einer Turbinenscheibe 133 am Rotor 103 angebracht sind. An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 106 auskleidenden Hitzeschildsteinen am meisten thermisch belastet. Um den dort herrschenden Temperaturen standzuhalten, werden diese mittels eines Kühlmittels gekühlt. Ebenso können die Schaufeln 120, 130 Beschichtungen gegen Korrosion (MCrAlX; M = Fe, Co, Ni, X=Y, Seltenen Erden) und Wärme (Wärmedämmschicht, beispielsweise ZrO₂, Y₂O₃-ZrO₂) aufweisen.

Die Leitschaufel 130 weist einen dem Innengehäuse 138 der Turbine 108 zugewandten Leitschaufelfuß (hier nicht dargestellt) und einen dem Leitschaufelfuß gegenüberliegendem Leitschaufelkopf auf. Der Leitschaufelkopf ist dem Rotor 103 zugewandt und an einem Befestigungsring 140 des Stators 143 festgelegt.

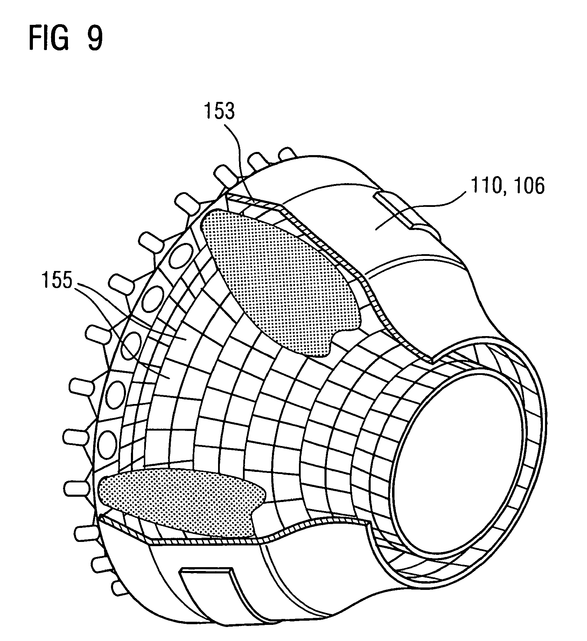

Die Figur 9 zeigt eine Brennkammer 110 einer Gasturbine 100. Die Brennkammer 110 ist beispielsweise als so genannte Ringbrennkammer ausgestaltet, bei der eine Vielzahl von in Umfangsrichtung um die Turbinenwelle 103 herum angeordneten Brennern 102 in einen gemeinsamen Brennkammerraum münden.

Dazu ist die Brennkammer 110 in ihrer Gesamtheit als ringförmige Struktur ausgestaltet, die um die Turbinenwelle 103 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen. Jedes Hitzeschildelement 155 ist arbeitsmediumsseitig mit einer besonders hitzebeständigen Schutzschicht ausgestattet oder aus hochtemperaturbeständigem Material gefertigt. Aufgrund der hohen Temperaturen im Inneren der Brennkammer 110 ist zudem für die Hitzeschildelemente 155 bzw. für deren Halteelemente ein Kühlsystem vorgesehen.

## Patentansprüche

1. Schichtsystem (1),
zumindest bestehend aus
einem Substrat (4),
einer metallischen Zwischenschicht (7) auf dem Substrat (4),
einer äußeren Schicht,
wobei auf dem Substrat (4) und/oder der Zwischenschicht (7) Verankerungsmittel (10, 13) vorhanden sind,
die eine andere Anbindungsart an die an die äußere Schicht (9) grenzende Oberfläche (5, 8) aufweisen als die äußere Schicht oder die Zwischenschicht (7) an die Oberfläche (5, 8),
wobei eine äußere keramische Schicht (9) auf der metallischen Zwischenschicht (7) angeordnet ist,
wobei Verankerungsmittel (10, 13) zumindest in der metallischen Zwischenschicht (7) vorhanden sind,
wobei die Verankerungsmittel (10) sich bis zu einer Oberfläche (8, 16) der Schicht (7, 9) erstrecken oder
wobei die Verankerungsmittel (13) sich nur innerhalb der Schicht (7, 9) erstrecken,
**dadurch gekennzeichnet,**
**dass** das Material der Verankerungsmittel (10, 13) dem Material der Schicht (7, 9) entspricht
und **dass** die äußere keramische Schicht (9) über zumindest einem Verankerungsmittel (10) der Zwischenschicht (7) angeordnet ist.

2. Schichtsystem nach Anspruch 1,
**dadurch gekennzeichnet, dass**
auf dem Substrat (4) und auf der Zwischenschicht (7) Verankerungsmittel (10, 13) vorhanden sind.

3. Schichtsystem nach Anspruch 1,
**dadurch gekennzeichnet, dass**
nur in der Zwischenschicht (7) Verankerungsmittel (10, 13) vorhanden sind.

4. Schichtsystem nach Anspruch 1, 2 oder 3,
**dadurch gekennzeichnet, dass**
die Verankerungsmittel (10, 13) säulenartig ausgebildet sind.

5. Schichtsystem nach Anspruch 1,
**dadurch gekennzeichnet, dass**
die Verankerungsmittel (10, 13) schmelzmetallurgisch mit dem Substrat (4) und/oder der Zwischenschicht (7) verbunden sind.

6. Schichtsystem nach einem oder mehreren der vorherigen Ansprüche,
**dadurch gekennzeichnet, dass**
die Verankerungsmittel (10, 13) lokal begrenzt auf dem Substrat (4) oder der Zwischenschicht (7) vorhanden sind.

7. Schichtsystem nach Anspruch 1,
**dadurch gekennzeichnet, dass**
das Schichtsystem (1) ein Bauteil einer Gas (100)- oder Dampfturbine ist.

8. Schichtsystem nach Anspruch 7,
**dadurch gekennzeichnet, dass**
das Bauteil eine Turbinenschaufel (120, 130), eine Brennkammerauskleidung (155) oder ein Gehäuseteil entlang des Strömungsweges eines Heißgases ist.

9. Schichtsystem nach Anspruch 7 oder 8,
**dadurch gekennzeichnet, dass**
das Bauteil (1) ein neu hergestelltes Bauteil ist.

10. Schichtsystem nach Anspruch 7 oder 8,
**dadurch gekennzeichnet, dass**
das Bauteil (1) ein wiederaufgearbeitetes Bauteil ist.

11. Verfahren zur Herstellung eines Schichtsystems (1), zumindest bestehend aus
einem Substrat (4),
einer metallischen Zwischenschicht (7) auf dem Substrat (4) und
einer äußeren Schicht (9),
wobei auf dem Substrat (4) oder der Zwischenschicht (7) Verankerungsmittel (10, 13) vorhanden sind oder erzeugt werden,
wobei im nachfolgenden Verfahrensschritt die Schicht (7, 9) so aufgebracht wird,
wobei die Verankerungsmittel (10, 13) zumindest in der metallischen Zwischenschicht (7) erzeugt werden,
dass die Verankerungsmittel (10) sich bis zu einer Oberfläche (8, 16) der Schicht (7, 9) erstrecken oder
wobei die Verankerungsmittel (13) sich nur innerhalb der Schicht (7, 9) erstrecken,
**dadurch gekennzeichnet,**
**dass** das Material der Verankerungsmittel (10, 13) dem Material der Schicht (7, 9) entspricht
und **dass** die äußere keramische Schicht (9) über zumindest einem Verankerungsmittel (10) der Zwischenschicht (7) angeordnet wird.

12. Verfahren zur Herstellung eines Schichtsystems (1), zumindest bestehend aus einem Substrat (4) und
einer metallischen Zwischenschicht (7) auf dem Substrat (4) und einer äußeren keramischen Schicht (9),
**dadurch gekennzeichnet, dass**
zuerst auf dem Substrat (4) oder der Zwischenschicht (7) eine Schicht (7, 9) aufgebracht wird,
und dann in einem nachfolgenden Prozess die Verankerungsmittel (10) in der Schicht (7, 9) erzeugt werden.

13. Verfahren nach Anspruch 11,
**dadurch gekennzeichnet, dass**
in einem ersten Verfahrensschritt die Verankerungsmittel (10, 13) auf das Substrat (4) aufgebracht werden.

14. Verfahren nach Anspruch 11 oder 12,
**dadurch gekennzeichnet, dass**
die Verankerungsmittel (10, 13) zusammen mit dem Substrat (4) hergestellt werden.

15. Verfahren nach Anspruch 13 oder 14,
**dadurch gekennzeichnet, dass**
die Verankerungsmittel (10, 13) durch einen Laserschweißprozess hergestellt werden.

16. Verfahren nach Anspruch 13 oder 14,
**dadurch gekennzeichnet, dass**
die Verankerungsmittel (10, 13) durch Elektronenbestrahlung erzeugt werden.

17. Verfahren nach Anspruch 13, 14, 16 oder 17,
**dadurch gekennzeichnet, dass**
die Verankerungsmittel (10, 13) so hergestellt werden, dass sie eine schmelzmetallurgische Anbindung an das Substrat (4) oder die Zwischenschicht (7) aufweisen.

## Claims

1. Layer system (1),
at least comprising
a substrate (4),
a metallic interlayer (7) on the substrate (4),
an outer layer, anchoring means (10, 13), which have a differing form of attachment to the surface (5, 8) that adjoins the outer layer (9) than the form of attachment of the outer layer or the interlayer (7) to the surface (5, 8), being present on the substrate (4) and/or the interlayer (7),
an outer ceramic layer (9) being arranged on the metallic interlayer (7),
anchoring means (10, 13) being present at least in the metallic interlayer (7),
the anchoring means (10) extending as far as a surface (8, 16) of the layer (7, 9) or
the anchoring means (13) extending only within the layer (7, 9),
**characterized**
**in that** the material of the anchoring means (10, 13) corresponds to the material of the layer (7, 9)
and **in that** the outer ceramic layer (9) is arranged over at least one anchoring means (10) of the interlayer (7).

2. Layer system according to Claim 1, **characterized in that** anchoring means (10, 13) are present on the substrate (4) and on the interlayer (7).

3. Layer system according to Claim 1, **characterized in that** anchoring means (10, 13) are present only in the interlayer (7).

4. Layer system according to Claim 1, 2 or 3, **characterized in that** the anchoring means (10, 13) are columnar in form.

5. Layer system according to Claim 1, **characterized in that** the anchoring means (10, 13) are joined to the substrate (4) and/or the interlayer (7) by melt metallurgy.

6. Layer system according to one or more of the preceding claims, **characterized in that** the anchoring means (10, 13) are present in locally delimited form on the substrate (4) or the interlayer (7).

7. Layer system according to Claim 1, **characterized in that** the layer system (1) is a component of a gas turbine (100) or steam turbine.

8. Layer system according to Claim 7, **characterized in that** the component is a turbine blade or vane (120, 130), a combustion chamber lining (155) or a housing part situated along the flow path of a hot gas.

9. Layer system according to Claim 7 or 8, **characterized in that** the component (1) is a newly produced component.

10. Layer system according to Claim 7 or 8, **characterized in that** the component (1) is a refurbished component.

11. Process for producing a layer system (1), at least comprising
a substrate (4),
a metallic interlayer (7) on the substrate (4) and
an outer layer (9),
anchoring means (10, 13) being present or produced on the substrate (4) or the interlayer (7),
the layer (7, 9) being applied in the following process step in such a way
with the anchoring means (10, 13) being produced at least in the metallic interlayer (7),
that the anchoring means (10) extend as far as a surface (8, 16) of the layer (7, 9) or
with the anchoring means (13) extending only within the layer (7, 9),
**characterized**
**in that** the material of the anchoring means (10, 13) corresponds to the material of the layer (7, 9)
and **in that** the outer ceramic layer (9) is arranged over at least one anchoring means (10) of the interlayer (7).

12. Process for producing a layer system (1), at least comprising a substrate (4) and a metallic interlayer (7) on the substrate (4) and an outer ceramic layer (9), **characterized in that** first of all a layer (7, 9) is applied to the substrate (4) or the interlayer (7), and then in a subsequent stage the anchoring means (10) are produced in the layer (7, 9).

13. Process according to Claim 11, **characterized in that** the anchoring means (10, 13) are applied to the substrate (4) in a first process step.

14. Process according to Claim 11 or 12, **characterized in that** the anchoring means (10, 13) are produced together with the substrate (4).

15. Process according to Claim 13 or 14, **characterized in that** the anchoring means (10, 13) are produced by a laser welding process.

16. Process according to Claim 13 or 14, **characterized in that** the anchoring means (10, 13) are produced by electron irradiation.

17. Process according to Claim 13, 14, 16 or 17, **characterized in that** the anchoring means (10, 13) are produced in such a way that they have a melt-metallurgy attachment to the substrate (4) or the interlayer (7).

## Revendications

1. Système (1) de couche,
constitué d'au moins
un substrat (4),
d'une couche (7) intermédiaire métallique sur le substrat (4),
d'une couche extérieure,
les moyens (10, 13) d'ancrage étant prévu sur le substrat (4) et/ou sur la couche (7) intermédiaire,
qui a un type de liaison, autre à la surface (5, 8) délimitant la couche (9) extérieure, que la couche extérieure ou que la couche (7) intermédiaire à la surface (5, 8),
une couche (9) extérieure en céramique étant disposée sur la couche (7) intermédiaire métallique,
des moyens (10, 13) d'ancrage étant présents au moins dans la couche (7) intermédiaire métallique,
les moyens (10) d'ancrage s'étendant jusqu'à une surface (8, 16) de la couche (7, 9) ou les moyens (13) d'ancrage ne s'étendant qu'au sein de la couche (7, 9),
**caractérisé,**
**en ce que** la matière des moyens (10, 13) d'ancrage correspond à la matière de la couche (7, 9),
et **en ce que** la couche (9) extérieure en céramique est disposée au-dessus d'au moins les moyens (10) d'ancrage de la couche (7) intermédiaire.

2. Système de couche suivant la revendication 1, **caractérisé en ce qu'**il y a des moyens (10, 13) d'ancrage sur le substrat (4) et sur la couche (7) intermédiaire.

3. Système de couche suivant la revendication 1, **caractérisé en ce qu'**il n'y a des moyens (10, 13) d'ancrage que dans la couche (7) intermédiaire.

4. Système de couche suivant la revendication 2 ou 3, **caractérisé en ce que** les moyens (10, 13) d'ancrage sont en forme de colonne.

5. Système de couche suivant la revendication 1, **caractérisé en ce que** les moyens (10, 13) d'ancrage sont reliés par métallurgie en phase fondue au substrat (4) et/ou à la couche (7) intermédiaire.

6. Système de couche suivant une ou plusieurs des revendications précédentes, **caractérisé en ce que** les moyens (10, 13) d'ancrage sont présents d'une manière limitée localement sur le substrat (4) ou la couche (7) intermédiaire.

7. Système de couche suivant la revendication 1, **caractérisé en ce que** le système (1) de couche est un élément constitutif d'une turbine à gaz (100) ou d'une turbine à vapeur.

8. Système de couche suivant la revendication 7, **caractérisé en ce que** l'élément constitutif est une aube (120, 130) de turbine, un revêtement (155) de chambre de combustion ou une partie d'enveloppe le long de la voie d'écoulement d'un gaz chaud.

9. Système de couche suivant la revendication 7 ou 8, **caractérisé en ce que** l'élément constitutif est un élément constitutif nouvellement fabriqué.

10. Système de couche suivant la revendication 7 ou 8, **caractérisé en ce que** l'élément (1) constitutif est un élément constitutif retraité.

11. Procédé de fabrication d'un système (1) de couche
constitué d'au moins
un substrat (4),
un couche (7) intermédiaire métallique sur le substrat (4) et
une couche (9) extérieure,
des moyens (10, 13) d'ancrage étant présents ou produits sur le substrat (4) ou sur la couche (7) intermédiaire,
dans lequel on dépose, dans le stade de procédé suivant, la couche (7, 9) de façon,
les moyens (10, 13) d'ancrage étant produits au moins dans la couche (7) intermédiaire métallique,
que les moyens (10) d'ancrage s'étendent jusqu'à une surface (8, 16) de la couche (7, 9) ou les moyens (13) d'ancrage ne s'étendent qu'au sein de la couche (7, 9),
**caractérisé**
**en ce que** la matière des moyens (10, 13) d'ancrage correspond à la matière de la couche (7, 9),
et **en ce que** la couche (9) extérieure en céramique est disposée sur au moins les moyens (10) d'ancrage de la couche (7) intermédiaire.

12. Procédé de fabrication d'un système (1) de couche, constitué d'au moins un substrat (4) et d'une couche (7) intermédiaire métallique sur le substrat (4) et d'une couche (2) extérieure en céramique,
**caractérisé en ce que**
on dépose d'abord sur le substrat (4) ou sur la couche (7) intermédiaire une couche (7, 9),
et on produit ensuite dans une opération suivante les moyens (10) d'ancrage dans la couche (7, 9).

13. Procédé suivant la revendication 11, **caractérisé en ce que**
on dépose dans un premier stade de procédé les moyens (10, 13) d'ancrage sur le substrat (4).

14. Procédé suivant la revendication 11 ou 12, **caractérisé en ce que** l'on produit les moyens (10, 13) d'ancrage en même temps que le substrat (4).

15. Procédé suivant la revendication 13 ou 14, **caractérisé en ce que** l'on produit les moyens (10, 13) d'ancrage par une opération de soudage laser.

16. Procédé suivant la revendication 13 ou 14, **caractérisé en ce que** l'on produit les moyens (10, 13) d'ancrage par un faisceau d'électrons.

17. Procédé suivant la revendication 13, 14, 16 ou 17, **caractérisé en ce que** l'on produit les moyens (10, 13) d'ancrage de manière à ce qu'ils aient une liaison en métallurgie fondu avec le substrat (4) ou la couche (7) intermédiaire.
